# EUROPÄISCHE PATENTSCHRIFT

(11) **EP 2 254 422 B1**
(45) Veröffentlichungstag und Bekanntmachung des Hinweises auf die Patenterteilung: **23.04.2014**
(21) Anmeldenummer: 09716391.9
(22) Anmeldetag: 05.03.2009
(51) Int. Cl.: A21B 3/04

(54) **GARGERÄT MIT EINER WRASENKONDENSIEREINRICHTUNG**
COOKING APPARATUS HAVING A VAPOR CONDENSATION DEVICE
APPAREIL DE CUISSON ÉQUIPÉ D'UN DISPOSITIF DE CONDENSATION DES VAPEURS

(30) Priorität: 06.03.2008 DE 102008012961
(43) Veröffentlichungstag der Anmeldung: 01.12.2010
(73) Patentinhaber: MKN Maschinenfabrik Kurt Neubauer GmbH & Co. KG, 38300 Wolfenbüttel (DE)
(72) Erfinder: HELM, Peter, 38304 Wolfenbüttel (DE)
(74) Vertreter: Strobel, Wolfgang
(86) Internationale Anmeldenummer: PCT/EP2009/052600
(87) Internationale Veröffentlichungsnummer: WO 2009/109621

(56) Entgegenhaltungen:
- EP-A- 0 092 851
- DE-A1- 4 333 585
- FR-A- 2 614 089
- US-A1- 2004 261 632

## Beschreibung

Die Erfindung bezieht sich auf ein Gargerät mit einem Garraum, mit einem Wrasenablaufkanal für im Garraum entstehende Wrasen, mit einer Wrasenkondensiereinrichtung, die die Wrasen mit abkühlender Flüssigkeit in Verbindung bringt, wobei die Wrasenkondensiereinrichtung einen Behälter aufweist, in dem sich ein Flüssigkeitsbad befindet, und wobei der Wrasenablaufkanal die Wrasen aus dem Garraum in den Behälter der Wrasenkondensiereinrichtung führt, wo die Wrasen mit der Flüssigkeit in dem Flüssigkeitsbad kontaktiert und so teilweise kondensiert werden, mit einem Geräteablauf.

Gargeräte zum Kochen oder Backen von Gargut sind beispielsweise Heißluftgeräte, Heißluftdämpfer oder Backöfen. Sie weisen einen Garraum auf, in dem ein Nahrungsmittel zubereitet wird.

Während des Garvorganges entstehen in dem Garraum des Gargerätes sogenannte Wrasen. Wrasen sind überwiegend dampfförmig und bestehen auch zum überwiegenden Teil aus Wasserdampf. Sie enthalten darüber hinaus auch Öle und Fette, welche in Form von Aerosolen oder auch flüssig vorliegen. Es können auch weitere Bestandteile enthalten sein. Die Wrasen entstehen während des Garvorganges durch die Verdampfung von Wasser, das in den Nahrungsmitteln enthalten ist; darüber hinaus trägt zu der Entstehung der Wrasen aber auch Dampf bei, der in den Garraum des Gerätes zugeführt wird. Diese Zuführung kann entweder durch einen externen Dampferzeuger oder aber auch durch direktes Verdampfen von Wasser innerhalb des heißen Garraumes entstehen. Dieser Wasserdampf ist durchaus beabsichtigt und für bestimmte Aspekte des Garvorganges wichtig.

Bei dem Garen von fetthaltigen Nahrungsmitteln beziehungsweise fetthaltigem Gargut bei hohen Temperaturen entstehen außerdem die bereits erwähnten Öl-und Fett-Aerosole.

Bei sogenannten drucklosen Gargeräten muss eine Möglichkeit geschaffen werden, die überschüssigen Wrasen entweichen zu lassen. Andernfalls würde sich innerhalb des Garraumes ein Druck aufbauen. Um dies zu vermeiden, besitzen herkömmliche Gargeräte häufig eine Abluftöffnung, aus der der Dampf beziehungsweise die Wrasen in die Raumluft entweichen können. Bei leistungsstarken Geräten kann dies zu einer starken Feuchtigkeits- und Wärmeanreicherung der Raumluft in der Umgebung des Gargerätes und in den gesamten Küchenräumen führen. Darüber hinaus wird durch die Öl- und Fett-Aerosole auch der Raum verschmutzt. Deshalb sind in Räumen, in denen derartige Gargeräte mit einer relativ hohen Kapazität aufgestellt sind, ausreichende Be- und Entlüftungsmaßnahmen erforderlich. Die mit diesen Be-und Entlüftungsmaßnahmen zwangsläufig verbundene Luftwechselrate führt zu einem hohen Energieaufwand für die Entlüftung sowie außerdem auch für die Kühlung oder Heizung der Raumluft. Aus gebäudetechnischen Gründen ist es in bestimmten Fällen nicht einmal möglich, eine Abluftanlage zu installieren, beispielsweise bei Altbauten und/oder aus Denkmalschutzgründen oder auch bei sogenanntem mobilen Catering.

In älteren, etwa aus der DE 16 79 119 B bekannten Grillgeräten genügte es noch, eine regelmäßige Lüftung des Innenraumes eines Grillofens mit Frischluft vorzunehmen, und dann den entstehenden Rauch abzuführen. Dabei wird auch schon vorgeschlagen, den Rauch durch eine Wasch- und Adsorptionsbatterie zu führen, die im unteren Teil des Ofens angeordnet werden kann und aus mehreren Blechtrennwänden besteht. Der Rauch soll dadurch durch Substanzen hindurch gezwungen werden, um Verunreinigungen abzuscheiden.

Um die Probleme mit den Be- und Entlüftungsmaßnahmen zu reduzieren, wird versucht, die entstehenden Menge an Wrasen möglichst gering zu halten beziehungsweise von der Abgabe an die Raumluft zu verringern. Zu diesem Zweck ist es bekannt, in den Bereich der Abluftöffnung oder in Wrasenkanäle, mit denen die Wrasen in die Raumluft abgeführt werden, Wasserdüsen zu platzieren. Ein etwa in dieser Form ausgebildeter Backöfen wird in der DE 30 27 566 C2 beschrieben. Diese Wasserdüsen können einen Wassernebel erzeugen, der dazu führt, dass ein Teil der Wrasen kondensiert. Dieses Kondensat wird dann zum Ablauf des Gargerätes geführt.

Aufgrund der beengten Platzverhältnisse innerhalb von Gargeräten kann eine solche Kondensation nicht sehr effektiv ausgestaltet werden. Das bedeutet, dass der Wasserverbrauch im Verhältnis zur Kondensationsleistung recht hoch ist. Außerdem verstopfen die relativ kleinen Querschnitte der Düsen, die zur Erzeugung des Wassernebels verwendet werden, relativ rasch durch Kalk und Schmutzpartikel.

In der DE 101 62 953 A1 wird beschrieben, unterhalb des Garraums einen zusätzlichen Kondensationsraum zu schaffen, in den die Wrasen über eine Zuführleitung aus dem Garraum hineingeführt werden. Sie werden dort mit einem Wasserstrahl aus einer Injektordüse abgekühlt, damit eine Kondensation stattfinden kann. Nach der Kondensation laufen die flüssigen Wrasen dann in den Ablauf.

Aus der DE 10 2006 034 081 A1 ist eine weitere Möglichkeit bekannt, die Wrasen in eine Kondensierungseinrichtung unterhalb des Garraumes zum Auskondensieren von Wrasen und/oder Dämpfen aus dem Garraum anzuordnen, die mit einer Ablöscheinrichtung arbeitet, mit der Wasser in die Kondensiereinrichtung eingespritzt wird.

Um eine effektivere Kondensation der Wrasen herbeizuführen, werden daher üblicherweise externe Kondensationseinrichtungen verwendet. Dieses sind separate Geräte, die mit dem Gargerät direkt verbunden sind. Diesen Kondensationseinrichtungen werden die Wrasen zugeführt und in diesen Kondensationseinrichtungen dann mittels Wassereinspritzung oder Luftkühlung die Verdampfungswärme der Wrasen entzogen und diese somit weitestmöglich kondensiert. Durch die größeren Volumina dieser externen Kondensationseinrichtungen ist eine deutlich bessere Kondensation der Wrasen möglich. Durch die Wassereinspritzung und auch durch zusätzliche Filter können auch unerwünschte Geruchsstoffe und die Fett- und Öl-Aerosole beseitigt beziehungsweise vermindert werden.

Eine derartige Möglichkeit ist etwa aus der DE 10 2005 050 483 A1 bekannt, bei der die Wrasen nach der thermischen Behandlung der Nahrungsmittel in eine separate Vorrichtung mit einem Flüssigkeitsbad in einem Behälter geführt werden, wobei die zugeführten gasförmigen Wrasen durch das Flüssigkeitsbad geführt werden, das darüber hinaus gekühlt wird.

Nachteilig an diesen Konzepten ist jeweils, dass ein zusätzliches Gerät benötigt wird, was einerseits zu höheren Kosten führt und andererseits auch eine wesentliche Volumenzunahme des Gesamtgerätes aus Gargerät und Kondensationsreinrichtung zur Folge hat.

Aus der EP 0 092 851 A2 ist ein Gargerät bekannt, mit einem Garraum, einem Wrasenablaufkanal für im Garraum entstehende Wrasen, einer Wrasenkondensiereinrichtung, die die Wrasen mit abkühlender Flüssigkeit in Verbindung bringt, und einem Geräteablauf, wobei die Wrasenkondensiereinrichtung einen Behälter aufweist, in dem sich ein Flüssigkeitsbad befindet und der ein Wrasenführungselement aufweist, welches die Wrasen durch einen oder mehrere Kanäle in dem Behälter führt, wobei der Wrasenablaufkanal die Wrasen aus dem Garraum in den Behälter der Wrasenkondensiereinrichtung führt, wo die Wrasen mit der Flüssigkeit im Flüssigkeitsbad kontaktiert und so teilweise kondensiert werden, und wobei das Wrasenführungselement so aufgebaut ist, dass eine der Wandflächen des oder der Kanäle von der Oberfläche des Flüssigkeitsbades in dem Behälter gebildet wird.

Gemäß dem Gargerät der EP 0 092 851 A2 wird mittels Überdruck der gasförmige Bestandteil des Wrasens zusammen mit der Oberflächenflüssigkeit des Flüssigkeitsbades zunächst an einer ersten Trennwand vorbeigedrückt, wodurch im dahinterliegenden Abschnitt des Flüssigkeitsbades der Flüssigkeitsspiegel angehoben wird und die Flüssigkeit über eine Seitenwand abfließt. Dabei kommt es zu einer Vermischung mit der Flüssigkeit des Flüssigkeitsbades und zu einer zunehmenden Verschmutzung von diesem.

Der vorliegenden Erfindung liegt deshalb die Aufgabe zugrunde, ein Gargerät vorzuschlagen, bei dem Öl und andere Fremdbestandteile, die sich innerhalb des Wrasenführungselements auf der Oberfläche des Flüssigkeitsbades niedergeschlagen haben, aus dem Wrasenführungselement auf einfachste Weise und ohne Behinderung ausgebracht werden können und eine Ansammlung dieser Bestandteile vermieden wird.

Diese Aufgabe wird durch die Merkmale des Anspruchs 1 gelöst.

Erfindungsgemäß besitzt das Wrasenführungselement an seinem strömungsseitigen Ausgang einen Abschnitt, in dem es nicht durch die Oberfläche des Flüssigkeitsbades in das Flüssigkeitsbad hineinragt, sondern einen oberhalb der Oberfläche liegenden Durchgang bildet. Dadurch können Öl und die anderen Fremdbestandteile an dieser Stelle das Wrasenführungselement auch wieder verlassen, indem sie schwimmend auf der Oberfläche hier heraustreiben. Dadurch wird vermieden, dass sich diese abgeschiedenen Bestandteile, beispielsweise Öl, innerhalb des Wrasenführungselements sammeln. Stattdessen können sie über den Geräteablauf des Gargeräts dieses vollständig verlassen.

Das Wrasenführungselement ist so aufgebaut, dass die Kontaktzeitdauer der strömenden Wrasen mit der Oberfläche des Flüssigkeitsbades möglichst groß ist. Dadurch erhöht sich die Wahrscheinlichkeit, dass sich ein Dampfmolekül der Wrasen in unmittelbarer Nähe einer kalten Oberfläche befindet, insbesondere der Oberfläche des Flüssigkeitsbades.

Dies geschieht bevorzugt dadurch, dass die von dem Wrasenführungselement und der Oberfläche des Flüssigkeitsbades gebildeten Kanäle oder der entsprechende Kanal mäanderförmig oder spiralförmig aufgebaut ist. Dadurch kann eine besonders effektive Verlängerung der Kontaktzeitdauer der strömenden Wrasen durch die Kanäle erzielt werden.

Es sind auch andere Geometrien denkbar, es hat sich jedoch gezeigt, dass die Wrasenführungselemente bei einer mäanderförmigen oder spiralförmigen Gestaltung des Kanals oder der Kanäle auch besonders kostengünstig hergestellt und die von der Oberfläche des Flüssigkeitsbades zur Verfügung gestellte Kontaktfläche besonders effektiv genutzt werden können.

Dabei ist zu berücksichtigen, dass das Wrasenführungselement sich geometrisch relativ einfach darstellt, wenn die untere Abgrenzung der so gebildeten Kanäle von der Flüssigkeitsoberfläche des Flüssigkeitsbades gebildet werden. Hierzu müssen dann die anderen Wandungen der Kanäle, die von dem Wrasenführungselement gebildet werden, nur noch in das Flüssigkeitsbad hineintauchen, um Strömungskurzschlüsse zu vermeiden.

Der Dampf der Wrasen kondensiert auf der Flüssigkeitsoberfläche besonders schnell, da es vergleichsweise einfach ist, die Temperatur der Flüssigkeitsoberfläche unterhalb des Kondensationspunktes der Wrasen zu halten, wobei dieser Kondensationspunkt etwa demjenigen von Wasserdampf entspricht.

Dies kann bevorzugt dadurch geschehen, dass ein temperaturgesteuertes Ventil vorgesehen wird, das im Bedarfsfall Frischwasser dem Flüssigkeitsbad im Behälter zuführt. Dadurch kann die Temperatur des Flüssigkeitsbades und insbesondere im Bereich seiner Oberfläche stets unterhalb des Siedepunktes von 100 °C gehalten werden, idealerweise auch unter 80 °C.

Das Kühlwasser kann auch ohne eine Düse und mit einem großen Auslaufquerschnitt zugeführt werden, um die Gefahr einer Verstopfung zu vermeiden.

Eine entsprechende Temperaturregelung kann in die Gerätesteuerung des Gargerätes integriert werden, die auch für die Temperatursteuerung im Inneren des Garraumes verantwortlich ist.

Besonders bevorzugt ist es, wenn der Wrasenablaufkanal zugleich ein Ablauf für Fluide aus dem Garraum ist und der Behälter in der Wrasenkondensiereinrichtung zugleich ein Auffangbecken für die aus dem Garraum ablaufenden Fluide ist, die in diesem Falle in das Flüssigkeitsbad in dem Behälter laufen.

Diese Lösung ist dadurch geradezu ideal, da Gargeräte auch herkömmlich mit einem Kasten ausgestattet sind, in den beispielsweise die Reinigungsflüssigkeit läuft, die anfällt, wenn in einem Reinigungsprozess nach dem Garvorgang das Innere des Garraumes gereinigt wird und die entsprechenden Flüssigkeiten abgeführt werden müssen. Auch flüssige Fette aus dem Inneren des Garraumes werden so abgeführt. Genau dieser Kasten kann nun auch erfindungsgemäß gleichzeitig als Behälter der Wrasenkondensiereinrichtung genutzt werden.

Bevorzugt ist es nun vorgesehen, einen Ablauf, der bei derartigen Konzepten auch herkömmlich als Geräteablauf für die Reinigungsflüssigkeit und die mit dieser abgeführten weiteren Verunreinigungen eingesetzt wird, nun auch für das Abführen des anfallenden Kondensates zu nutzen.

Dies ist auch deshalb von Vorteil, da ein temperaturgesteuertes Ventil für die Zufuhr von Kühlwasser auch dafür genutzt werden kann, die Abwassertemperatur in vorgeschriebenen Grenzen zu halten. In das öffentliche Kanalnetz dürfen ohnehin nur Abwässer bei bestimmten maximalen Temperaturen eingespeist werden, die auf diese Weise ebenso und in der gleichen Weise eingehalten werden können.

Dabei ist es bevorzugt, wenn in dem Behälter der Wrasenkondensiereinrichtung ein Abluftkanal vorgesehen wird. Durch die Kondensation der Wrasen in den Kanälen des Wrasenführungselementes entsteht auch von dem kondensierten Wasser und den Aerosolen befreite Luft, die durch diesen Abluftkanal in die Raumluft abgegeben werden kann. Anders als herkömmliche Abluft ist diese Abluft nun wesentlich weniger feuchtigkeitshaltig und enthält auch deutlich weniger Fett- und Öl-Aerosole oder sonstige Verschmutzungen, da diese weitestgehend in dem Flüssigkeitsbad durch die Kondensation zurückgehalten werden. Die Abluft aus diesem Abluftkanal aus der Wasserkondensiereinrichtung ist also wesentlich weniger störend als herkömmlich die Abluft direkt aus dem Garraum.

Der erwähnte Geräteablauf aus dem kastenförmigen Behälter der Wrasenkondensiereinrichtung führt wie erwähnt sämtliche Flüssigkeiten aus dem Betrieb des Gargerätes in das gebäudeseitige Kanalnetz ab und entsorgt diese. Die Höhe des Geräteablaufes in dem Behälter bestimmt zugleich auch die Höhe des Wasserspiegels des Flüssigkeitsbades. Dadurch kann auf einfache Weise die Höhe dieses Wasserspiegels konstant gehalten werden.

Um zu vermeiden, dass Gase aus dem Geräteablauf in das Kanalnetz austreten können oder dass umgekehrt Gase aus dem Kanalnetz in die Wrasenkondensiereinrichtung und damit möglicherweise auch in den Garraum oder die Umgebung eintreten können, ist es bevorzugt, wenn ein Siphon vor dem Geräteablauf in dem Behälter angeordnet ist und das Flüssigkeitsbad in dem Behälter zugleich eine Wasservorlage im Siphon bildet.

Von Vorteil ist auch, dass der Dampf der Wrasen auf den Wasseroberflächen besonders schnell kondensiert. Durch die Kondensation wird die Eigenschaft dieser Oberfläche nicht verändert, da diese ebenfalls im Wesentlichen aus Wasser besteht, ebenso wie der kondensierende Wasserdampf aus den Wrasen. Eine Kondensation an Festkörpern führt herkömmlich in der Regel zu einer Verschlechterung der weiteren Kondensation, was gemäß der Erfindung jedoch gerade nicht eintritt.

Das Wrasenführungselement weist bevorzugt eine Öffnung oberhalb des Flüssigkeitsspiegels des Flüssigkeitsbades auf, damit die gasförmigen und nicht kondensierten Gase aus dem Wrasenführungselement und den Kanälen entweichen können.

Zur weiteren Führung weist der Behälter den bereits erwähnten Abluftkanal auf, der in die Raumluft mündet. Mit diesem Ablaufkanal können auch andere, nicht kondensierbare Gase an die Raumluft abgegeben werden. Diese Gase sind insbesondere diejenige Luft, die beispielsweise bei Aufheiz- oder Abkühlvorgängen im Garraum ab- beziehungsweise zugeführt werden muss, um den Druck im Garraum auf Umgebungsdruck zu halten. Entscheidend ist ja im Wesentlichen, dass möglichst die gesamten Wrasen innerhalb des Wrasenführungselementes kondensiert werden, bevor die Wrasen den Abluftausgang erreichen.

Die Kondensation des Dampfes aus den Wrasen führt zu einer Erhöhung des Wasserspiegels, die jedoch zeitgleich zu einer Vermehrung des Ablaufes führt. Tatsächlich bleibt der Wasserspiegel also auch bei dem Kondensationsvorgang konstant.

Bevorzugt wird ferner vorgesehen, das Kühlwasser, welches durch das temperaturgesteuerte Ventil, insbesondere ein Magnetventil, zugeführt wird, auf eine horizontale Wandung des Wrasenführungselementes zu geben, sodass die Wandung selbst dadurch gekühlt wird.

Dies verbessert die Kondensationswirkung der gesamten Wrasenkondensiereinrichtung.

Dies kann noch weiter verstärkt werden, indem die mit dem Wasser beaufschlagte horizontale Fläche eine Umrandung aufweist, sodass auf dieser Fläche ein Wasserspiegel stehen bleibt. Dadurch ergibt sich eine längere Kontaktzeit zwischen diesem Kühlwasser und dem Wrasenführungselement. Dadurch kann wiederum die Temperatur des Wrasenführungselementes niedriger gehalten werden. Wenn die Fläche befüllt ist, läuft das Wasser automatisch in den Behälter über und von da aus zum Ablauf.

Es wird außerdem bevorzugt, wenn der Kühlwasserzulauf benachbart zum Wrasenablaufkanal das Kühlwasser dem Flüssigkeitsbad zuführt.

Dies hat den Vorteil, dass die zusätzliche Flüssigkeit eine Strömung fördert, die innerhalb des Wrasenführungselementes die auf der Oberfläche des Flüssigkeitsbades kondensierenden Bestandteile, beispielsweise Öle, in die gleiche Richtung transportiert, wie auch die strömenden Wrasen selbst. Das führt dazu, dass diese auf der Oberfläche sich absetzenden Öle auch in Richtung zum Ausgang des Wrasenführungselementes gelangen und sich nicht innerhalb der Kanäle festsetzen.

Bevorzugt besteht das Wrasenführungselement aus einem Werkstoff mit einer hohen Wärmeleitung und mit einer hohen Wärmekapazität. Auch dadurch kann die Kondensationsleistung in den entstehenden Kanälen beziehungsweise dem Kanal gesteigert werden.

Eine weitere Optimierung des Wrasenführungselementes kann dadurch erreicht werden, dass der Kanal in der Strömungsrichtung der Wrasen in dem Kanal im Querschnitt entweder stetig oder mindestens einmal sprunghaft abnimmt. Dadurch kann berücksichtigt werden, dass die Wrasenwährend ihrer Strömung durch den Kanal oder die Kanäle des Wrasenführungselementes durch das Kondensieren der Dämpfe ständig ihr Volumen verringern. Wird nun auch der Querschnitt der Kanäle verringert, so erhöht sich wiederum die Kontaktwahrscheinlichkeit der Wrasen mit einer der Wandungen, wobei wie erwähnt eine der Wandungen von der Oberfläche des Flüssigkeitsbades gebildet wird.

Durch die Verringerung des Querschnittes des Kanals beziehungsweise der Kanäle kann auch das Wrasenführungselement noch kompakter gestaltet werden.

Aufgrund der Wärmespeicherkapazität und der immer vorhandenen Flüssigkeitsoberfläche als eine der Wandungen ist eine durchgehende Kühlung der Wrasenkondensiereinrichtung mit Wasser nicht erforderlich, sodass nur die zur Kondensation nötige Wassermenge zugeführt werden muss. Dadurch kann über das temperaturgesteuerte Ventil ein besonders sparsamer intermittierender Betrieb erfolgen. Dies gilt besonders dann, wenn die Temperatur der Flüssigkeit im Flüssigkeitsbad von einem Temperaturfühler ermittelt und als Regelparameter für das Ventil, insbesondere ein Magnetventil, verwendet wird.

Die kondensierenden oder an Wasser gebundenen Öl- und Fett-Aerosole können mittels des Geräteablaufs leicht abgeführt werden und führen so nicht zu einer Anlagerung oder Verstopfung des Kanals oder der Kanäle in dem Wrasenführungselement. Darüber hinaus kann es sich auch um Feststoffe handeln, etwa kleinere Fasern oder Bruchstücke des Garguts aus dem Garraum, die sich vom Gargut gelöst haben und mit den Wrasen durch den Wrasenablaufkanal in die Wrasenkondensiereinrichtung und den Behälter gelangt sind. Diese Gargutbruchstücke oder anderen Feststoffe gelangen so auch ins Flüssigkeitsbad.

Da das Wrasenführungselement erfindungsgemäß nach unten für Feststoffe oder Flüssigkeiten offen ist beziehungsweise die untere Wandung von der Oberfläche des Flüssigkeitsbades gebildet wird, ist eine Verstopfungswahrscheinlichkeit des Kanals oder der Kanäle außerordentlich gering. Auch Feststoffe können nach unten innerhalb des Flüssigkeitsbades absinken.

Eine weitere Verbesserung wird dann gegeben, wenn das Wrasenführungselement nur etwas in die Flüssigkeit eintaucht und unterhalb des Wrasenführungselementes in dem Flüssigkeitsbad ein ausreichend tiefer Flüssigkeitsstand vorhanden ist. Dadurch wird auch die Verstopfungsgefahr durch unlösbare Bestandteile im Flüssigkeitsbad sehr verringert, da diese unlösbaren Bestandteile sich unterhalb des Wrasenführungselementes wieder frei bewegen können und so besonders einfach zum Geräteablauf gelangen können.

Der Flüssigkeitsstand unterhalb des Wrasenführungselementes sollte dabei so groß sein, dass die in den Behälter der Wrasenkondensiereinrichtung eintretenden festen Elemente, beispielsweise Reste von Gargutteilen, sich frei unterhalb des Wrasenführungselementes bewegen können. Als weiterer Vorteil ergibt sich dadurch, dass es besonders einfach ist, den Behälter mit dem Wrasenführungselement durch eine automatische oder aber auch durch eine manuelle Reinigung zu säubern.

Auch solche Feststoffe beziehungsweise Gargutbruchstücke, die an der Oberfläche des Flüssigkeitsbades gemeinsam mit den abgeschiedenen Ölbestandteilen treiben, werden bei den bevorzugten Ausführungsformen der Erfindung mit der auf Grund der kühlwasserzulaufsströmenden oberflächennahen Flüssigkeit durch die Kanäle des Wrasenführungselements zu dessen Ausgang geführt und können diesen durch die dort bevorzugt vorgesehene Öffnung verlassen.

Es ist eine überraschende Erkenntnis, dass sich durch ein konstruktiv verhältnismäßig einfaches Wrasenführungselement eine Kontaktzeitverlängerung wie außerdem auch eine Erhöhung der Kontaktwahrscheinlichkeit zwischen den Wrasen und der kalten Wandung beziehungsweise der Oberfläche eines Flüssigkeitsbades erreichen lässt und somit die Kondensation der Wrasen ohne ein besonders kompliziertes zusätzliches Gerät sichergestellt werden kann.

Im Folgenden wird anhand der Zeichnung ein Ausführungsbeispiel der Erfindung näher erläutert. Es zeigen:
- **Figur 1**: eine schematische Ansicht eines erfindungsgemäßen Gargerätes; und
- **Figur 2**: eine Ansicht auf ein wesentliches Element des Gargerätes aus Figur 1, gesehen von unten.

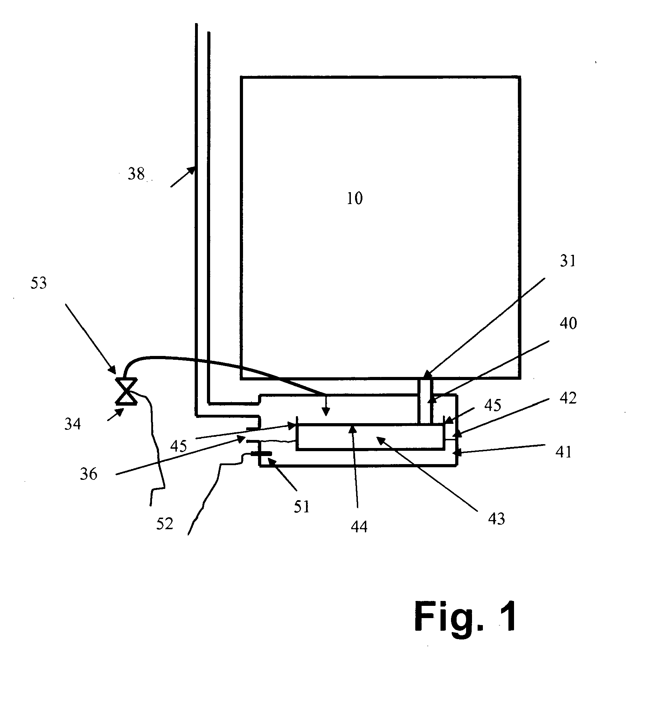

Ein Gargerät ist in der **Figur 1** dargestellt. Aus Gründen der Übersichtlichkeit sind durchaus wichtige Bauteile dieses Gargerätes weggelassen, beispielsweise die Einzelteile des Gehäuses, der Gerätesteuerung oder der Heizelemente. Man sieht das Gargerät von der Seite und erkennt insbesondere einen Garraum 10. In dem Garraum 10 werden Nahrungsmittel durch Erhitzung zubereitet, beispielsweise gebacken, gekocht, erwärmt und dabei unter anderem auch mit mehr oder weniger Feuchtigkeit beaufschlagt.

Aus dem Garraum 10 führt ein Wrasenablaufkanal 31 nach unten. Dieser Wrasenablaufkanal führt den in dem Garraum 10 befindlichen überschüssigen Wasserdampf zusammen mit Wrasen, die im Garraum 10 durch die Behandlung der Nahrungsmittel entstehen, aus dem Garraum 10 heraus. In der dargestellten erfindungsgemäßen Konzeption führt dieser Wrasenablaufkanal 31 zugleich auch Flüssigkeiten aus dem Garraum 10 ab, die dort entstehen können, beispielsweise Fette oder andere bei der Behandlung der Nahrungsmittel beziehungsweise des Gargutes entstehende Flüssigkeiten. Durch diesen Wrasenablaufkanal können auch Reinigungsflüssigkeiten abströmen, die bei der Reinigung außerhalb des Garvorganges in dem Garraum 10 verwendet werden und etwa entstehende feste Verschmutzungsreste aus dem Garraum 10 gelöst haben.

Der Wrasenablaufkanal 31 führt in eine Wrasenkondensiereinrichtung 40. Diese Wrasenkondensiereinrichtung 40 weist insbesondere einen kastenförmigen Behälter 41 auf.

In dem Behälter 41 steht ein Flüssigkeitsbad 42, das eine Oberfläche beziehungsweise einen Flüssigkeitsspiegel besitzt.

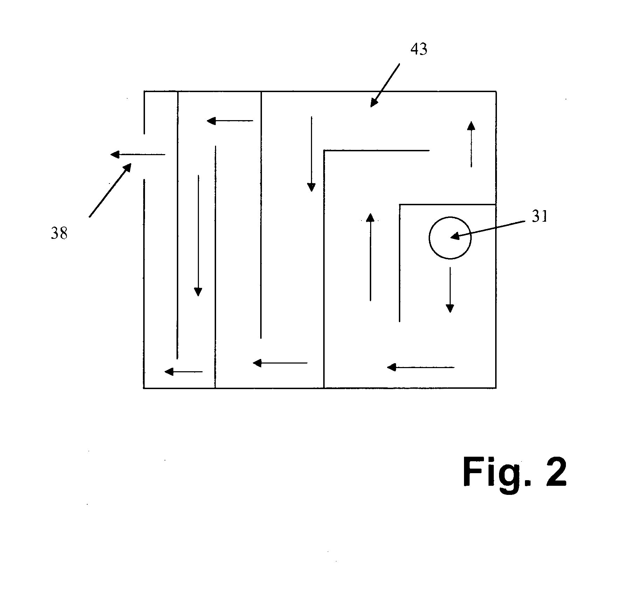

Ein Wrasenführungselement 43 ist vorgesehen, das in der Figur 1 sich schematisch von der Seite gesehen als Rechteck zeigt und dass in der Figur 2 noch im Folgenden näher beschrieben wird.

Die durch den Wrasenablaufkanal 31 in den Behälter 41 gelangenden wasserdampfhaltigen Wrasen strömen nun durch dieses Wrasenführungselement und bekommen in diesem Wrasenführungselement 43 Kontakt mit der Oberfläche des Flüssigkeitsbades 42. Sie kondensieren auf dieser Oberfläche.

Der Behälter 41 besitzt ferner einen Gargeräteablauf 36, dessen untere Kante zugleich die Höhe des Flüssigkeitsspiegels des Flüssigkeitsbades 42 im Behälter 41 festlegt. Dies führt dazu, dass aus dem Wasserdampf kondensierendes Wasser und sich absetzende Fett- und Öl-Aerosole den Flüssigkeitsspiegel des Flüssigkeitsbades 42 nicht erhöhen können, da diese zusätzlichen Flüssigkeitsanteile sogleich über den Geräteablauf 36 in eine (nicht dargestellte) gebäudeseitige Kanalisation abströmen.

Damit aus der gebäudeseitigen Kanalisation nicht Gase in den Behälter 41 und womöglich in den Garraum 10 eintreten können, kann hier ein Siphon 33 vorgesehen werden, der der Übersichtlichkeit halber hier nicht näher dargestellt ist und für den der Flüssigkeitsspiegel des Flüssigkeitsbades 42 als Wasservorlage dient.

Die von dem kondensierenden Wasserdampf und den Fett- und Öl-Aerosolen und sonstigen Bestandteilen befreiten Luftanteile der Wrasen sowie andere, aus dem Garraum 10 über den Wrasenablaufkanal 31 in den Behälter 41 gelangende Gase können über einen Abluftkanal 38 aus dem Behälter 41 in die Umgebung des Gargerätes abgegeben werden. Diese Luft ist jetzt weder besonders fett- und ölhaltig noch feucht und daher in der Umgebung des Gargerätes wesentlich leichter verträglich als herkömmliche Abluft.

Die Temperatur des Flüssigkeitsbades 42 in dem Behälter 41 kann durch einen Temperaturfühler 51 ermittelt werden. Dieser Temperaturfühler 51 ist gemäß der Figur 1 mit einer Steuerung 52 verbunden, die ein Ventil 53 steuert, das die Zufuhr 34 von kühlem Frischwasser in den Behälter 41 und damit auch in das Flüssigkeitsbad 42 regelt beziehungsweise steuert.

Das Wrasenführungselement 43 wird auf seiner Oberseite von einer plattenähnlichen, im wesentlichen horizontalen Wandung 44 gebildet. Von dieser horizontalen Wandung 44 ragen dann vertikale flächige Bereiche nach unten bis zur und knapp unter die Oberfläche des Flüssigkeitsbades 42. Der Kühlwasserzulauf 34 führt das Kühlwasser auf die Wandung 44 des Wrasenführungselements 43. Dabei ist in der dargestellten Ausführungsform angedeutet, dass eine Umrandung 45 oben auf der Wandung 44 vorgesehen ist. Diese Umrandung 45 umgrenzt einen flachen Bereich, in dem sich das Kühlwasser des Kühlwasserzulaufs 34 oben auf der Wandung 44 vorübergehend aufhält und so für eine Kühlung dieser Wandung 44 und dadurch zugleich auch des gesamten Wrasenführungselements 43 sorgt, bevor dieses Kühlwasser des Kühlwasserzulaufs 34 dann durch eine vorgesehene Öffnung in der Wandung 44 in das Innere des Wrasenführungelementes 43 in das Flüssigkeitsbad 42 fällt.

Dabei ist diese Öffnung bevorzugt in unmittelbarer Nachbarschaft des Wrasenablaufkanals 31 vorgesehen, der hier aus dem Garraum 10 ebenfalls durch die Wandung 44 hindurch in das Innere des Wrasenführungselements 43 bis über die Oberfläche des Flüssigkeitsbades 42 führt.

Dies hat zur Folge, dass das Kühlwasser eine Strömung innerhalb des Wrasenführungselements 43 in zumindest den oberflächennahen Bereichen des Flüssigkeitsbades 42 erzeugt, was dazu führt, dass sich die auf der Oberfläche des Flüssigkeitsbades 42 sammelnden und kondensierenden Bestandteile mit den darüber befindlichen gasförmigen Dämpfen und Wrasen gemeinsam durch das Wrasenführungselement 43 bewegen.

In der **Figur 2** ist wie erwähnt angedeutet, wie ein Wrasenführungselement 43 aussehen könnte. Das Wrasenführungselement 43 ist hier von unten dargestellt, also aus dem Flüssigkeitsbad 42 heraus durch dessen Oberfläche nach oben gesehen. Dabei sieht man rechts angedeutet, wie von oben Wrasen, Wasserdampf oder andere Atmosphäre aus dem Garraum 10 durch einen Wrasenablaufkanal 31 in das Wrasenführungselement 43 eintritt. Zu bedenken ist dabei, dass sich in der Blattebene die Flüssigkeitsoberfläche des Flüssigkeitsbades 42 befindet und die Wrasen mithin nicht durch diese Oberfläche hindurchtreten.

Stattdessen bewegen sie sich auf einer mäanderförmigen Bahn, einem Kanal, dessen untere Abgrenzung von der Oberfläche des Flüssigkeitsbades 42 gebildet wird und dessen obere Abgrenzung eine in etwa plattenförmige Konstruktion als Teil des Wrasenführungselements 43 bildet. Dazwischen befinden sich vertikale und mithin in der Darstellung in der Figur 2 als Linien sichtbare Bleche, die die mäanderförmigen Kanäle bilden.

Dabei kann man der Figur 2 entnehmen, dass der Querschnitt des hier nur einen Kanals von rechts nach links kontinuierlich geringer wird. Dies berücksichtigt, dass die Wrasen während ihres Strömens durch das Wrasenführungselement 43 einen Teil ihres Wasserdampfgehalts durch Kondensation an die Flüssigkeit des Flüssigkeitsbades 42 abgeben und mithin die Menge an strömenden Wrasen ebenfalls abnimmt.

Links ist ein Ausgang aus dem Wrasenführungselement 43 zu erkennen, der zu einem Abluftkanal 38 führt.

Die vertikalen Bleche des Wrasenführungselements 43 ragen um eine kurze Strecke durch die Oberfläche des Flüssigkeitsbades 42 in die Flüssigkeit hinein und verhindern so, dass die strömenden Wrasen strömungstechnische Abkürzungen nehmen.

Andererseits ragen die vertikalen Bleche des Wrasenführungselements 43 nur ein kurzes Stück in die Flüssigkeit des Flüssigkeitsbades 42 hinein, um es Feststoffen und kleinen Bröckchen zu ermöglichen, unterhalb des Wrasenführungselementes 43 in dem Flüssigkeitsbad 42 frei zu bewegen und so zum Geräteablauf 36 zu kommen, ohne den Kanal oder die Kanäle in dem Wrasenführungselement 43 zu verstopfen.

In der Darstellung in Figur 2 kennzeichnen Pfeile dabei jeweils den Pfad der Wrasen.

Im Bereich des Ausgangs aus dem Wrasenführungselement 43 ragen die vertikalen Bleche nicht durch die Oberfläch des Flüssigkeitsbades 42, sondern lassen hier einen bestimmten Abschnitt frei. Auch dieses ist schematisch in der Figur 2 angedeutet. Dies hat den Vorteil, dass die auf der Oberfläche des Flüssigkeitsbades 42 hier befindlichen Öle oder auch Feststoffteilchen problemlos das Wrasenführungselement 43 verlassen können, um sich weiter zum gebäudeseitigen Geräteablauf 36 bewegen zu können.

### Bezugszeichenliste

- 10: Garraum

- 31: Wrasenablaufkanal
- 33: Siphon
- 34: Kühlwasserzulauf
- 36: Geräteablauf
- 38: Abluftkanal

- 40: Wrasenkondensiereinrichtung
- 41: Behälter
- 42: Flüssigkeitsbad
- 43: Wrasenführungselement
- 44: Wandung
- 45: Umrandung

- 51: Temperaturfühler
- 52: Steuerung
- 53: Ventil

## Patentansprüche

1. Gargerät, mit
einem Garraum (10),
einem Wrasenablaufkanal (31) für im Garraum (10) entstehende Wrasen, einer Wrasenkondensiereinrichtung (40), die die Wrasen mit abkühlender Flüssigkeit in Verbindung bringt, und
einem Geräteablauf (36),
wobei die Wrasenkondensiereinrichtung (40) einen Behälter aufweist, in dem sich ein Flüssigkeitsbad (42) befindet und der ein Wrasenführungselement (43) aufweist, welches die Wrasen durch einen oder mehrere Kanäle in dem Behälter (41) führt,
wobei der Wrasenablaufkanal (31) die Wrasen aus dem Garraum (10) in den Behälter (41) der Wrasenkondensiereinrichtung (40) führt, wo die Wrasen mit der Flüssigkeit im Flüssigkeitsbad (42) kontaktiert und so teilweise kondensiert werden, und
wobei das Wrasenführungselement (43) so aufgebaut ist, dass eine der Wandflächen des oder der Kanäle von der Oberfläche des Flüssigkeitsbades (42) in dem Behälter (41) gebildet wird,
**dadurch gekennzeichnet,**
**dass** das Wrasenführungselement (43) an seinem strömungsseitigen Ausgang einen Abschnitt besitzt, in dem es nicht durch die Oberfläche des Flüssigkeitsbades (42) in das Flüssigkeitsbad hineinragt, sondern einen oberhalb der Oberfläche liegenden Durchgang bildet.

2. Gargerät nach Anspruch 1,
**dadurch gekennzeichnet,**
**dass** der Wrasenablaufkanal (31) zugleich ein Ablauf für Fluide aus dem Garraum (10) ist, und
**dass** der Behälter (41) in der Wrasenkondensiereinrichtung (40) zugleich ein Auffangbecken für die aus dem Garraum (10) ablaufenden Fluide ist, die in das Flüssigkeitsbad (42) in dem Behälter (41) laufen.

3. Gargerät nach Anspruch 1 oder 2,
**dadurch gekennzeichnet,**
**dass** ein Siphon (33) vor dem Geräteablauf (36) in dem Behälter (41) angeordnet ist, und
**dass** das Flüssigkeitsbad im Behälter (41) zugleich eine Wasservorlage (34) im Siphon (33) bildet.

4. Gargerät nach Anspruch 3,
**dadurch gekennzeichnet,**
**dass** ein temperaturgesteuertes Ventil (53) vorgesehen ist, das gesteuert von der mittels eines Temperaturfühlers (51) in dem Flüssigkeitsbad (42) festgestellten Temperatur einen Kühlwasserzulauf (34) freigibt.

5. Gargerät nach Anspruch 4,
**dadurch gekennzeichnet,**
**dass** der Kühlwasserzulauf (34) zunächst eine horizontale Wandung des Wrasenführungselementes (43) beaufschlagt.

6. Gargerät nach Anspruch 5,
**dadurch gekennzeichnet,**
**dass** die zunächst mit Kühlwasser (34) beaufschlagte horizontale Wandung (44) des Wrasenführungselementes (43) mit einer Umrandung (45) ausgestattet ist, um einen Wasserspiegel auf dem Wrasenführungselement (43) zu bilden.

7. Gargerät nach einem der Ansprüche 4 bis 6,
**dadurch gekennzeichnet,**
**dass** der Kühlwasserzulauf (34) benachbart zum Wrasenablaufkanal (31) das Kühlwasser dem Flüssigkeitsbad (42) zuführt.

8. Gargerät nach einem der vorstehenden Ansprüche,
**dadurch gekennzeichnet,**
**dass** der Kanal oder die Kanäle innerhalb des Wrasenführungselementes (43) spiralförmig gestaltet sind.

9. Gargerät nach einem der Ansprüche 1 bis 7,
**dadurch gekennzeichnet,**
**dass** der Kanal oder die Kanäle innerhalb des Wrasenführungselementes (43) mäanderförmig gestaltet sind.

10. Gargerät nach einem der vorstehenden Ansprüche,
**dadurch gekennzeichnet,**
**dass** das Wrasenführungselement (43) nur geringfügig durch die Oberfläche des Flüssigkeitsbades (42) in das Flüssigkeitsbad hineinragt.

11. Gargerät nach einem der vorstehenden Ansprüche,
**dadurch gekennzeichnet,**
**dass** die von dem Wrasenführungselement (43) gebildeten Kanäle beziehungsweise der gebildete Kanal sich in Strömungsrichtung der Wrasen im Querschnitt kontinuierlich oder diskontinuierlich verringert.

## Claims

1. A cooking device, with
a cooking chamber (10),
a fume-extraction channel (31) for fumes occurring in the cooking chamber (10), a fume-condensation device (40), which brings the fumes into contact with cooling liquid, and
a device outlet (36),
wherein the fume-condensation device (40) provides a container in which a liquid bath (42) is disposed and which provides a fume-guide element (43), which guides the fumes through one or more channels in the container (41),
wherein the fume-outlet channel (31) guides the fumes from the cooking chamber (10) into the container (41) of the fume-condensation device (40), where the fumes are contacted with the liquid in the liquid bath (42) and are thus partially condensed, and
wherein the fume-guide element (43) is constructed in such a manner that one of the wall-faces of the channel or channels is formed by the surface of the liquid bath (42) in the container (41),
**characterised in that**
the fume-guide element (43) provides at its output-flow side a portion in which it does not project through the surface of the liquid bath (42) into the liquid bath but forms a passage disposed above the surface.

2. The cooking device according to claim 1,
**characterised in that**
the fume-extraction channel (31) is at the same time an outlet for fluids from the cooking chamber (10), and that the container (41) in the fume-condensation device (40) is at the same time a receiving tray for the fluids draining from the cooking chamber (10), which flow into the liquid bath (42) in the container (41).

3. The cooking device according to claim 1 or 2,
**characterised in that**
a siphon (33) is arranged upstream of the device outlet (36) in the container (41), and
that the liquid bath in the container (41) at the same time forms a water store (34) in the siphon (33).

4. The cooking device according to claim 3,
**characterised in that**
a temperature-controlled valve (53) is provided, which, controlled by the temperature specified by means of a temperature sensor (51) in the liquid bath (42), releases a cooling-water supply (34).

5. The cooking device according to claim 4,
**characterised in that**
the cooling-water supply (34) initially impinges on a horizontal wall of the fume-guide element (43).

6. The cooking device according to claim 5,
**characterised in that**
the horizontal wall (44) of the fume-guide element (43) initially impinged upon by cooling water (34) is fitted with a peripheral edge (45) in order to form a water level on the fume-guide element (43).

7. The cooking device according to any one of claims 4 to 6,
**characterised in that**
the cooling-water supply (34) supplies the cooling water to the liquid bath (42) adjacent to the fume-extraction channel (31).

8. The cooking device according to any one of the preceding claims,
**characterised in that**
the channel or the channels are embodied in a spiral shape inside the fume-guide element (43).

9. The cooking device according to any one of claims 1 to 7,
**characterised in that**
the channel or the channels are embodied in a meandering shape inside the fume-guide element (43).

10. The cooking device according to any one of the preceding claims,
**characterised in that**
the fume-guide element (43) projects only slightly through the surface of the liquid bath (42) into the liquid bath.

11. The cooking device according to any one of the preceding claims,
**characterised in that**
the channels or respectively the channel formed by the fume-guide element (43) narrow in cross-section in a continuous or discontinuous manner in the direction of flow of the fumes.

## Revendications

1. Appareil de cuisson, comprenant
un compartiment de cuisson (10),
un conduit d'échappement des buées (31) pour les buées formées dans le compartiment de cuisson (10), un dispositif de condensation des buées (40), qui amène les buées en liaison avec du liquide de refroidissement, et
une évacuation d'appareil (36),
le dispositif de condensation des buées (40) comportant un récipient, dans lequel se situe un bain de liquide (42) et qui présente un élément de guidage des buées (43), lequel élément guide les buées au travers d'un ou de plusieurs conduits dans le récipient (41),
le conduit d'échappement des buées (31) guidant les buées du compartiment de cuisson (10) dans le récipient (41) du dispositif de condensation des buées (40), où les buées sont amenées au contact du liquide dans le bain de liquide (42) et sont ainsi en partie condensées, et
l'élément de guidage des buées (43) étant structuré de sorte que l'une des surfaces de paroi du ou des conduits est formée par la surface du bain de liquide (42) dans le récipient (41),
**caractérisé en ce que**
l'élément de guidage des buées (43) est pourvu sur sa sortie du côté écoulement d'une section, dans laquelle il ne pénètre pas dans le bain de liquide (42) au travers de la surface de ce dernier, mais forme un passage situé au-dessus de la surface.

2. Appareil de cuisson selon la revendication 1,
**caractérisé en ce que**
le conduit d'échappement des buées (31) est en même temps une évacuation pour des fluides du compartiment de cuisson (10), et
le récipient (41) dans le dispositif de condensation des buées (40) est en même temps une cuvette de réception pour les fluides s'écoulant du compartiment de cuisson (10), lesquels fluides passent dans le bain de liquide (42) du récipient (41).

3. Appareil de cuisson selon l'une des revendications 1 et 2, **caractérisé en ce que**
un siphon (33) est disposé dans le récipient (41) en amont de l'évacuation d'appareil (36), et
le bain de liquide dans le récipient (41) forme en même temps une fermeture hydraulique (34) dans le siphon (33).

4. Appareil de cuisson selon la revendication 3,
**caractérisé en ce que**
il est prévu une vanne (53) contrôlée en température, qui ouvre une arrivée d'eau de refroidissement (34) sous contrôle de la température détectée au moyen d'un capteur de température (51) dans le bain de liquide (42).

5. Appareil de cuisson selon la revendication 4,
**caractérisé en ce que**
l'arrivée d'eau de refroidissement (34) sollicite d'abord une paroi horizontale de l'élément de guidage des buées (43).

6. Appareil de cuisson selon la revendication 5,
**caractérisé en ce que**
la paroi horizontale (44), d'abord sollicitée par l'eau de refroidissement (34), de l'élément de guidage des buées (43) est équipée d'une bordure (45), pour former un niveau d'eau sur l'élément de guidage des buées (43),

7. Appareil de cuisson selon l'une des revendications 4 à 6,
**caractérisé en ce que**
l'arrivée d'eau de refroidissement (34) alimente le bain de liquide (42) en eau de refroidissement au voisinage du conduit d'échappement des buées (31).

8. Appareil de cuisson selon l'une des revendications précédentes,
**caractérisé en ce que**
le conduit ou les conduits à l'intérieur de l'élément de guidage des buées (43) sont configurés en forme de spirale.

9. Appareil de cuisson selon l'une des revendications 1 à 7,
**caractérisé en ce que**
le conduit ou les conduits à l'intérieur de l'élément de guidage des buées (43) sont configurés en forme de méandre.

10. Appareil de cuisson selon l'une des revendications précédentes,
**caractérisé en ce que**
l'élément de guidage des buées (43) ne pénètre que légèrement dans le bain de liquide (42) au travers de la surface de ce dernier.

11. Appareil de cuisson selon l'une des revendications précédentes,
**caractérisé en ce que**
les conduits ou le conduit formés par l'élément de guidage des buées (43) se réduisent en continu ou en discontinu dans leur section transversale dans la direction d'écoulement des buées.
